# FASCICULE DE BREVET EUROPEEN

(11) **EP 3 411 855 B1**
(45) Date de publication et mention de la délivrance du brevet: **08.12.2021**
(21) Numéro de dépôt: 17702388.4
(22) Date de dépôt: 02.02.2017
(51) Int. Cl.: G07C 9/00, G06K 19/07

(54) **DISPOSITIF D'IDENTIFICATION RADIO-FRÉQUENTIEL SOUS FORME D'ANNEAU MUNI D'UN SYSTÈME DE DÉTÉRIORATION DES DONNÉES PERSONNELLES EN CAS DE PERTE OU DE VOL**
RFID-VORRICHTUNG IN FORM EINES RINGES MIT EINEM SYSTEM ZUR BEEINTRÄCHTIGUNG PERSÖNLICHER DATEN IM FALLE VON DIEBSTAHL ODER VERLUST
RADIOFREQUENCY IDENTIFICATION DEVICE IN THE FORM OF A RING PROVIDED WITH A SYSTEM FOR DETERIORATING PERSONAL DATA IN THE EVENT OF LOSS OR THEFT

(30) Priorité: 03.02.2016 FR 1650866
(43) Date de publication de la demande: 12.12.2018
(73) Titulaire: Icare Technologies, 20000 Ajaccio (FR)
(72) Inventeur: Neyrou, Jérémy, 20167 Peri (FR); Raiola, Fabien, 20137 Porto-Vecchio (FR)
(74) Mandataire: Marconnet, Sébastien
(86) Numéro de dépôt international: PCT/EP2017/052276
(87) Numéro de publication internationale: WO 2017/134174

(56) Documents cités:
- WO-A1-2015/081321
- US-A1- 2011 271 053
- US-A1- 2015 028 996
- US-A1- 2015 220 109

## Description

L'invention porte sur un dispositif d'identification muni d'un transpondeur radio-fréquentiel par exemple de type RFID (ou "Radio-identification" ou "Radio Frequency Identification" en anglais) et/ou NFC (ou "Communication en champ proche" ou "Near Field Communication" en anglais) se présentant sous la forme d'un anneau.

L'invention peut être mise en œuvre dans tous les domaines nécessitant une identification, ou un mot de passe pour déverrouiller le fonctionnement d'un système, sécuriser les contrôles d'accès, tels que de manière non limitative, l'automobile, la domotique, par exemple pour l'ouverture de portes, l'informatique, et le domaine des transactions bancaires.

La demanderesse a développé un dispositif d'identification comportant un transpondeur radio-fréquentiel passif intégré sur un anneau pouvant être porté tous les jours, de type bague. Ce dispositif passif décrit dans le document FR1554360 est apte à émettre des informations notamment d'identification dès lors qu'une antenne émet des ondes électromagnétiques à portée. A cet effet, le dispositif comporte une mémoire stockant certaines informations personnelles de l'utilisateur. Toutefois, dans le cas où le dispositif serait volé ou égaré, une autre personne pourrait en usurper l'utilisation, ce qui induit un risque d'un détournement de l'objet et donc un manque de sécurité.

Le document US2015/028996 décrit un dispositif biométrique agencé pour capturer une ou plusieurs caractéristiques biométriques d'un utilisateur, telles que des caractéristiques correspondant à un électrocardiogramme de l'utilisateur.

Le document US2011 /271053 décrit un module de mémoire de données comportant une mémoire à semi-conducteur réinscriptible et non volatile et un contrôleur d'accès avec un module de communication.

Le document US2015/220109 décrit un dispositif informatique portable se présentant sous la forme d'un anneau pouvant être porté au doigt d'un utilisateur.

Le document WO2015/081321 décrit un dispositif portable sous la forme d'une bague qui peut être portée au doigt d'un utilisateur. Afin de détecter son retrait, le dispositif comporte des capteurs de lumière ou des capteurs de température disposés sur sa face interne.

L'invention vise à remédier efficacement à cet inconvénient en proposant un dispositif d'identification tel que défini selon la revendication 1.

La détérioration des données pourra consister par exemple en un effacement total ou partiel de ces données dans les zones mémoires correspondantes ou en un cryptage ou un chiffrement total ou partiel de ces données par un algorithme mathématique adapté. Ainsi, les informations peuvent être cryptées à l'aide par exemple d'un algorithme de chiffrement symétrique de type AES ("Advanced Encryption Standard") 256 bits.

Ainsi, la configuration est telle que lorsque ledit anneau est porté autour d'un doigt d'un utilisateur, ledit élément photosensible est masqué au moins en partie et ne produit pas un courant suffisant pour modifier lesdites zones mémoires stockant des données personnelles, et lorsque ledit anneau est retiré du doigt de l'utilisateur, ledit élément photosensible reçoit une lumière naturelle ou artificielle de manière à produire un courant correspondant pour générer un état logique engendrant une détérioration d'au moins une partie desdites zones mémoires stockant lesdites données personnelles.

L'invention permet ainsi d'améliorer la sécurité du dispositif d'identification en garantissant la suppression des données confidentielles ou non, sensibles ou non, stockées dans la mémoire du transpondeur lors du retrait de la bague du doigt du porteur.

Selon une réalisation, ledit élément photosensible est constitué par une cellule photovoltaïque.

Selon une réalisation, ledit élément photosensible est recouvert d'une couche de vernis de protection translucide. La translucidité du vernis est un critère de sélection important permettant d'ajuster le seuil de sensibilité de la cellule, afin que les données ne s'effacent pas au moindre mouvement écartant la cellule par rapport au doigt de l'utilisateur.

Selon une réalisation, ledit dispositif comporte une pluralité de cellules photovoltaïques. Une telle caractéristique permet d'éviter une suppression intempestive des données, dans la mesure où l'effacement des données ne s'effectue alors que si l'ensemble des cellules produit suffisamment d'électricité.

Selon une réalisation, lesdites cellules photovoltaïques sont espacées angulairement entre elles de manière régulière autour dudit anneau. Cela permet d'optimiser la répartition des cellules.

Selon l'invention, ledit élément photosensible est associé à un circuit électronique comportant au moins une résistance pour régler un seuil de déclenchement d'un changement d'état dudit élément photosensible et un condensateur pour régler une durée avant déclenchement dudit changement d'état.

Selon une réalisation, ledit élément photosensible est relié à un interrupteur électronique apte à provoquer un effacement ou un cryptage desdites données lorsque ledit interrupteur électronique est alimenté par ledit élément photosensible.

Selon une réalisation, ledit anneau comporte au moins un moyen d'anti-rotation pour bloquer en rotation ledit anneau autour du doigt de l'utilisateur. Cela permet d'indexer en rotation le dispositif autour du doigt pour s'assurer d'un positionnement correct de l'antenne vis-à-vis d'une cible correspondante (tel qu'un lecteur).

Selon une réalisation, ledit moyen d'anti-rotation est constitué par un méplat ou une forme ovaloïde ménagée dans ladite face interne dudit anneau.

Selon une réalisation, un ratio entre une plus grande épaisseur d'une portion d'anneau comportant le méplat ou la forme ovaloïde et une épaisseur d'une portion d'anneau dépourvue de méplat ou de forme ovaloïde est compris entre 1 et 5.

Selon une réalisation, des informations contenues dans la mémoire dudit microcontrôleur sont cryptées.

Selon une réalisation, ledit élément photosensible ne fournit pas suffisamment de courant pour effacer les données ou pour alimenter le microcontrôleur qui effectuera cette opération. Il convient donc de rajouter un système de récupération d'énergie.

Le système de récupération d'énergie récupère l'énergie qui peut ensuite être transformée et stockée par ce système ou par un autre. Dans ce cas, le ou les éléments photosensibles à l'intérieur de l'anneau ne servent que de déclencheur de l'effacement des données. L'effacement est alors effectué directement ou indirectement par l'énergie stockée dans le dispositif d'identification.

Il existe une multitude de systèmes de récupération d'énergie pouvant être utilisés avec l'invention. Le système de récupération peut être capable de transformer directement ou indirectement l'énergie thermique ou lumineuse en énergie électrique. Dans le cas de la récupération de l'énergie lumineuse, les cellules doivent être suffisamment réactives pour produire rapidement de l'énergie électrique. Selon une réalisation particulière, ces cellules sont réalisées sur mesure pour l'anneau. Dans un exemple de réalisation, elles n'excèdent pas 1mm d'épaisseur et peuvent être souples.

On utilise avantageusement une cellule photovoltaïque sensible à la fois aux rayonnements solaires et à une grande variété des rayonnements lumineux artificiels. La cellule peut avantageusement disposer d'une sensibilité spectrale maximale vers la longueur d'onde 580nm et d'un spectre de sensibilité plus large que celui de l'œil humain.

Selon une réalisation particulière, le système de récupération d'énergie peut aussi être un système mécanique qui, lorsqu'il est mis en mouvement, pourra produire directement ou indirectement un courant électrique. Selon une autre réalisation de ce dispositif mécanique, une "roulette" frotte contre le doigt lorsqu'on retire la bague et produit alors de l'électricité.

Selon une réalisation particulière, le système de récupération d'énergie peut aussi être composé d'une antenne. Il récupère alors l'énergie électromagnétique des champs électromagnétiques dans lesquels il est baigné, de manière à produire une énergie électrique. Ces champs peuvent dépendre des fréquences du NFC comme d'autres fréquences comme le wifi ou les fréquences radiotéléphoniques.

Selon une réalisation particulière, le système de récupération d'énergie peut aussi être capable de récupérer l'électricité statique du corps humain au moyen d'électrodes en contact avec la peau du porteur. En détenant un matériau (très) négativement chargé ou (très) positivement, une différence de potentiel électrique sera alors observée entre le matériau et le corps qui porte la bague. Cette électricité produite peut être utilisée directement ou indirectement pour l'effacement des données. Dans ce cas, elle est stockée dans un système de stockage d'énergie.

Selon une réalisation particulière, le système de récupération d'énergie peut aussi être un système basé sur un nano-générateur, utilisant une superposition de différents matériaux piézoélectriques souples (avec par exemple du polyfluorure de vinylidène (PVDF), du plastique rigide qui peut aussi être traité à l'oxyde de zinc).

Ce dispositif piézoélectrique a la faculté de se plier tout en générant de l'électricité lorsqu'il est soumis à des vibrations, même faibles. Ce système de récupération peut être intégré dans l'intérieur ou l'extérieur de l'anneau de manière à générer de l'électricité lorsqu'une importante friction se produit entre l'anneau et le doigt, ou dans le cas d'une intégration sur la partie externe, pour générer de l'électricité avec les différents contacts/impacts mécaniques que l'anneau subira au cours d'une utilisation quotidienne.

Le système de stockage de l'énergie peut être réalisé par un ou une pluralité de condensateurs. A titre d'exemple et de manière non exhaustive, le type de condensateur peut être avec papier d'aluminium, avec papier métallisé, au Mica, de céramique, électrochimique non polarisé, électrochimique polarisé et plus spécifiquement les tantales. Le condensateur sélectionné pourra être de type variable.

Selon une autre réalisation, le dispositif de stockage est réalisé au moyen d'une ou plusieurs batteries situées dans le pourtour de l'anneau. Ces batteries peuvent avoir une forme circulaire de manière à être intégrées facilement dans l'anneau. Elles peuvent être souples, semi-souple, dures ou pliables par endroits.

Pour certaines batteries ou condensateurs, il convient de laisser davantage de place dans l'anneau de manière à ce qu'au cours du gonflement dû à la charge (qui peut aller jusqu'à 10% du volume) l'anneau ou la batterie ne soient pas détériorés.

Selon une réalisation particulière, l'anneau peut embarquer un module sécurisé associé à un contrôleur NFC qui permet d'utiliser la bague dans le domaine bancaire, en autorisant par exemple la réalisation des transactions.

Une interface utilisateur, telle qu'une diode, peut aussi être insérée sur l'anneau de manière à informer l'utilisateur de l'état effacé ou non de la mémoire.

L'invention sera mieux comprise à la lecture de la description qui suit et à l'examen des figures qui l'accompagnent. Ces figures ne sont données qu'à titre illustratif mais nullement limitatif de l'invention.

Les figures 1a et 1b sont respectivement des vues de côté et en coupe suivant le plan A-A d'un dispositif d'identification selon l'invention équipé d'un système de détérioration des données personnelles selon la présente invention;

La figure 2 est une représentation schématique fonctionnelle du microcontrôleur intégré dans le dispositif selon la présente invention;

Les figures 3a et 3b sont respectivement des vues de côté et en coupe suivant le plan B-B illustrant une variante de réalisation du dispositif d'identification selon l'invention;

La figure 4 est une vue de face d'un dispositif d'identification selon l'invention intégrant plusieurs cellules photovoltaïques;

La figure 5 est un schéma fonctionnel de la logique associée à l'interpréteur de commande dans le cas de l'utilisation de plusieurs cellules photovoltaïques;

La figure 6 représente un mode de réalisation du dispositif d'identification selon l'invention présentant une forme permettant l'indexage en rotation de l'anneau par rapport au doigt de l'utilisateur;

Les figures 7a à 7b illustrent des variantes de réalisation possibles du dispositif d'indexage muni d'une forme ovaloïde interne ou d'un méplat;

La figure 8 est un schéma fonctionnel des différentes interactions du dispositif d'identification selon la présente invention avec des éléments de son environnement dans le cadre d'une application automobile;

Les figures 9a à 9d sont respectivement des vues de côté, de dessus, de derrière et de devant d'un véhicule équipé d'un lecteur radio pour interagir avec le dispositif d'identification selon la présente invention

La figure 10 est une représentation schématique fonctionnelle d'un mode de réalisation préférentiel du dispositif d'identification selon l'invention;

La figure 11 est une vue en coupe partielle du dispositif d'identification selon la présente invention.

Les éléments identiques, similaires ou analogues conservent la même référence d'une figure à l'autre. En outre, dans la description qui suit, les termes de positionnement relatif de type "haut", "bas", "gauche" et "droit" sont entendus par référence au sens donné à ces termes par un utilisateur portant l'anneau main tendu la paume orientée vers le sol de la pièce.

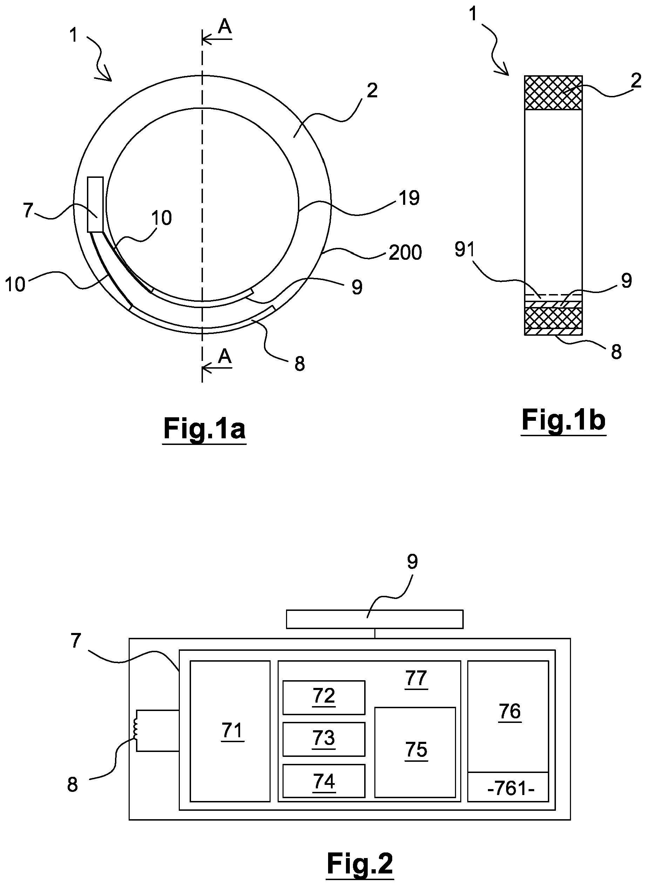

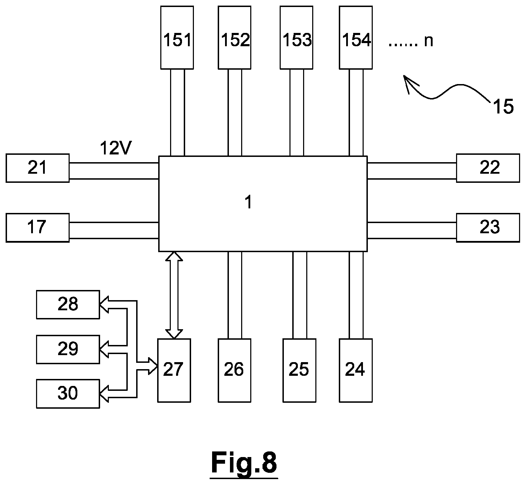

Les figures 1a et 1b montrent un dispositif d'identification 1 comprenant un corps en forme d'anneau 2 d'axe X intégrant un transpondeur radio-fréquentiel 3 comportant un microcontrôleur (ou puce 7) et une antenne 8 apte émettre un champ électromagnétique transportant des informations d'identification pour la communication avec un lecteur radio 15 correspondant (cf. figure 8). Le transpondeur 3 est par exemple de type NFC ou RFID ou tout autre transpondeur de communication à distance autonome et sans alimentation embarquée. Alternativement, plusieurs transpondeurs 3 peuvent être intégrés au corps annulaire 2 pour permettre une identification par différents types de lecteurs radio 15.

Le dispositif 1 peut être étanche (ou non), imperméable (ou non), insensible aux granules, poussières (ou non) ou à toute autre substance/matière pouvant engendrer un masque électromagnétique, ou une détérioration de l'ensemble.

Plus précisément, comme cela est illustré en figure 2, le microcontrôleur 7 par exemple de type "MFOICU2" de la société NXP Semiconductors comporte une interface radio-fréquentielle 71 composée d'un modulateur/démodulateur, d'un redresseur, d'un régénérateur d'horloge et d'un régulateur de tension. Le microcontrôleur 7 comporte également des processeurs cryptographiques 72 des données par exemple à triple encryptions et une unité de contrôle cryptographique 73 associée pour contrôler les opérations des processeurs cryptographiques.

Un interpréteur de commandes 74 permet de gérer les commandes pour accéder à l'interface mémoire 75 en communication avec une mémoire 76. La mémoire 76 est une mémoire morte. A titre d'exemple et de manière non restrictive elle peut-être de type ROM, EPROM, EEPROM, ou SSD. L'ensemble des éléments 72, 73, 74, 75 est commandé par l'unité de contrôle numérique 77.

Dans un exemple de réalisation, la mémoire 76 dispose de 1536 bits organisés en 48 pages avec 32 bits chacun. 80 bits sont réservés aux données du fabricant. 32 bits sont utilisés pour le mécanisme de verrouillage en lecture seule. Les 32 bits des pages 4 à 39 correspondent à des zones 761 stockant des données personnelles d'un utilisateur. Les zones de la mémoire 76 sont considérées comme écrites lorsqu'elles sont à l'état logique "1" et vides à l'état logique "0". Les informations contenues dans la mémoire 76 peuvent être cryptées à l'aide par exemple d'un algorithme de chiffrement symétrique de type AES (pour "Advanced Encryption Standard" en anglais) 256 bits.

Lorsque le dispositif 1 est positionné à proximité du lecteur 15, l'interface de communication radio-fréquentielle 71 à grande vitesse permet la transmission des données à une vitesse de 106 kbit/s. L'énergie et les données sont transférées par l'intermédiaire de l'antenne 8 constituée par exemple d'une bobine de quelques spires directement connectée au microcontrôleur 7. Aucun autre composant externe n'est nécessaire. En variante, des composants de type diodes, bobines, et condensateurs pourraient être utilisés pour traiter le signal avant réception par le microcontrôleur 7.

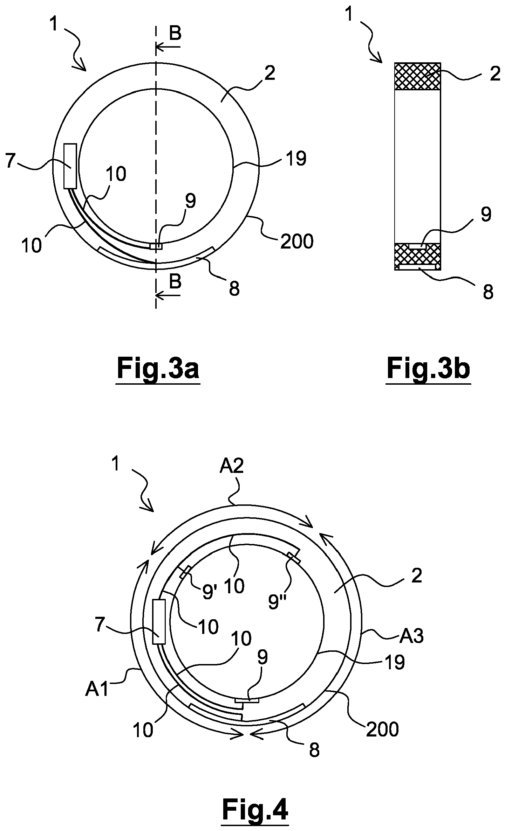

Le dispositif d'identification 1 comprend en outre au moins un élément photosensible 9 apte à générer un courant lorsque ledit élément 9 est éclairé. Comme cela est visible sur les figures 1a, 1b, 3a et 3b, l'élément photosensible 9 est positionné sur une face interne 19 de l'anneau 2. L'élément photosensible 9 est de préférence une cellule photovoltaïque. En variante, la cellule photovoltaïque 9 pourra être remplacée par un phototransistor, une photorésistance, ou plus généralement tous composant relevant de l'optoélectronique capable de générer un courant électrique.

La cellule photovoltaïque 9 pourra être implantée de différentes manières à l'intérieur de l'anneau 2. Ainsi, la cellule 9 pourra être fixée en surface, par exemple par collage, ou moulée dans l'anneau 2. Dans ce cas, on prévoit une fenêtre ménagée dans l'anneau située en regard de la cellule 9.

On utilise avantageusement une cellule photovoltaïque 9 sensible à la fois aux rayonnements solaires et à une grande variété des rayonnements lumineux artificiels. Dans un exemple de réalisation, la cellule 9 dispose d'une sensibilité spectrale maximale vers la longueur d'onde 580nm et d'un spectre de sensibilité plus large que celui de l'œil humain.

La cellule photovoltaïque 9 peut-être de différents types, à titre d'exemple et de manière non limitative la cellule photovoltaïque 9 utilisée est réalisée en silicium monocristallin, multicristallin (ou polycristallin), en silicium amorphe, en tandem, en CGIS ("Cuivre, Indium, Gallium, et Sélénium"), en tellurure de cadmium, et est de type organique et/ou multi-jonctions.

L'ensemble de ces composants sont reliés entre eux via des liaisons filaires 10 ou un circuit imprimé flexible de type PCB ("Printed Circuit Board" en anglais).

On décrit ci-après le fonctionnement du dispositif 1 selon la présente invention. Lorsque l'anneau 2 est porté autour d'un doigt d'un utilisateur, la cellule photovoltaïque 9 est masquée au moins en partie par le doigt et ne produit pas un courant suffisant pour modifier les zones mémoire 761 stockant les données personnelles de l'utilisateur.

Lorsque l'anneau 2 est retiré du doigt de l'utilisateur, la cellule photovoltaïque 9 reçoit une lumière qui peut être soit une lumière naturelle soit une lumière artificielle et produit un courant correspondant, de manière à générer un état logique engendrant une détérioration d'au moins une partie des zones de la mémoire 761 stockant les données personnelles de l'utilisateur. La détérioration des données personnelles de l'utilisateur pourra consister par exemple en un effacement total ou partiel de ces données dans les zones mémoires correspondantes ou en un cryptage ou un chiffrement total ou partiel de ces données par un algorithme mathématique adapté. Ainsi, les informations peuvent être cryptées à l'aide par exemple d'un algorithme de chiffrement symétrique de type AES ("Advanced Encryption Standard") 256 bits.

Dans le cas d'un effacement, et selon le type du ou des microprocesseurs utilisés ainsi que leurs normes de fonctionnement correspondantes, le courant électrique devra imposer un état logique "1" ou "0" à l'ensemble des zones mémoires 761 contenant les données personnelles de l'utilisateur. Avec le microcontrôleur précité MFOICU2, l'exposition à la lumière de la cellule photovoltaïque 9 aura pour effet de mettre à l'état logique "0" les zones mémoires 761 contenant les données de l'utilisateur. Les pages 4 à 39 pourront ainsi être effacées.

La cellule photovoltaïque 9 pourra être indirectement à l'origine de l'effacement des données. Par exemple, lorsque la cellule 9 est éclairée, la cellule 9 commande la délivrance d'un courant provenant d'une autre source d'énergie intégrée à l'anneau 2, à titre d'exemple une ou plusieurs cellules photovoltaïques 9 situées sur la périphérie extérieure de l'anneau 2.

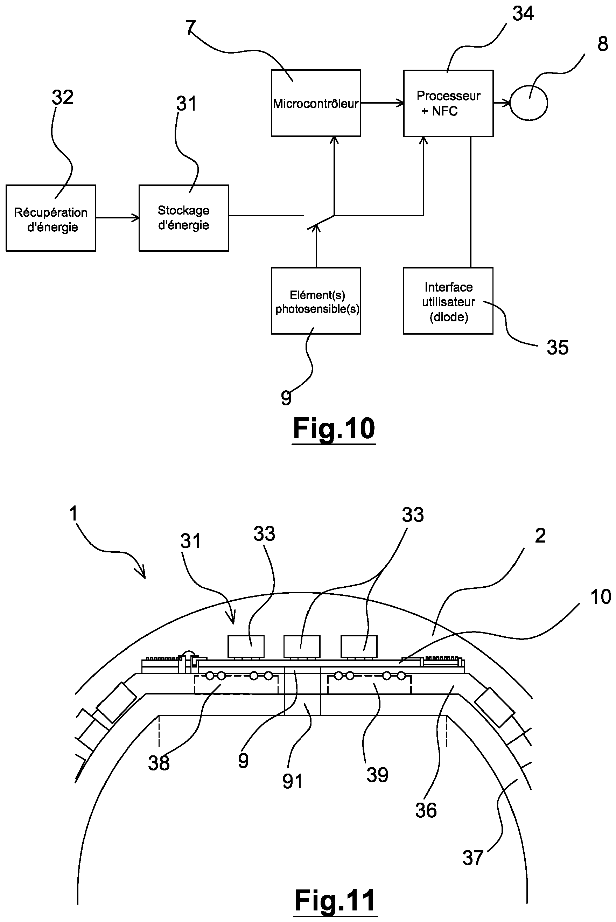

Dans certains cas, l'élément photosensible 9 ne fournit pas suffisamment de courant pour effacer les données ou pour alimenter le microcontrôleur 7 qui effectuera cette opération. Comme cela est représenté sur la figure 10, le ou les éléments photosensibles 9 assurent une fonction de déclencheur autorisant un système de stockage d'énergie 31 à alimenter le microcontrôleur 7 qui effectue directement ou indirectement l'effacement complet ou non des données des zones mémoires 761. Lorsque l'élément photosensible 9 est éclairé, il pourra par exemple engendrer la fermeture d'un interrupteur associé établissant une connexion électrique entre le système de stockage 31 et le microcontrôleur 7 pour permettre son alimentation et l'effacement des données. L'énergie stockée dans le système 31 est issue d'un système de récupération d'énergie 32.

Il existe une multitude de systèmes de récupération d'énergie 32 pouvant être utilisés avec l'invention. Le système de récupération 32 peut être apte à transformer directement ou indirectement l'énergie thermique ou lumineuse en énergie électrique. Dans le cas de la récupération de l'énergie lumineuse, les cellules doivent être suffisamment réactives pour produire rapidement de l'énergie électrique. Selon une réalisation particulière, ces cellules sont réalisées sur mesure pour l'anneau 2. Les cellules n'excèdent pas 1mm d'épaisseur et peuvent être souples.

On utilise avantageusement une cellule photovoltaïque sensible à la fois aux rayonnements solaires et à une grande variété des rayonnements lumineux artificiels. La cellule peut avantageusement disposer d'une sensibilité spectrale maximale vers la longueur d'onde 580nm et d'un spectre de sensibilité plus large que celui de l'œil humain

Le système de récupération d'énergie 32 peut aussi être constitué par un système mécanique qui, lorsqu'il est mis en mouvement, pourra produire directement ou indirectement un courant électrique. Selon une autre réalisation de ce dispositif mécanique, une "roulette" frotte contre le doigt lorsqu'on retire la bague et produit alors de l'électricité.

Selon une réalisation particulière, le système de récupération d'énergie 32 peut aussi être composé d'une antenne. Il récupère l'énergie électromagnétique des champs électromagnétiques dans lesquels il est baigné de manière à produire une énergie électrique. Ces champs peuvent dépendre des fréquences du NFC comme d'autres fréquences comme le WIFI ou les fréquences radiotéléphoniques.

Selon une réalisation particulière, le système de récupération d'énergie 32 peut aussi être apte à récupérer l'électricité statique du corps humain au moyen d'électrodes en contact avec la peau du porteur. En détenant un matériau (très) négativement chargé ou (très) positivement, une différence de potentiel électrique sera alors observée entre le matériau et le corps qui porte l'anneau 2. Cette électricité produite peut être utilisée directement ou indirectement pour l'effacement des données. Dans ce cas d'utilisation indirecte, elle est stockée dans le système de stockage d'énergie 31.

Selon une réalisation particulière, le système de récupération d'énergie 32 peut aussi être un système basé sur un nano-générateur, utilisant une superposition de différents matériaux piézoélectriques souples (avec par exemple du polyfluorure de vinylidène (PVDF), du plastique rigide qui peut aussi être traité à l'oxyde de zinc).

Ce dispositif piézoélectrique a la faculté de se plier tout en générant de l'électricité lorsqu'il est soumis à des vibrations, même faibles. Ce système de récupération 32 peut être intégré dans l'intérieur ou l'extérieur de l'anneau 2 de manière à générer de l'électricité lorsqu'une importante friction se produit entre l'anneau 2 et le doigt, ou dans le cas d'une intégration sur la partie externe, pour générer de l'électricité avec les différents contacts/impacts mécaniques que l'anneau 2 subira au cours d'une utilisation quotidienne.

Le système de stockage d'énergie 31 peut être réalisé par un ou une pluralité de condensateurs 33. A titre d'exemple et de manière non exhaustive, le type de condensateur 33 peut être avec papier d'aluminium, avec papier métallisé, au Mica, de céramique, électrochimique non polarisé, électrochimique polarisé et plus spécifiquement les tantales. Le condensateur 33 sélectionné peut aussi être variable.

Selon une autre réalisation, le système de stockage d'énergie 31 est réalisé au moyen d'une ou plusieurs batteries situées dans le pourtour de l'anneau 2. Ces batteries peuvent avoir une forme circulaire de manière à être intégrées facilement dans l'anneau 2. Elles peuvent être souples, semi-souple, dures ou pliables par endroits.

Pour certaines batteries ou condensateurs 33, il convient de laisser davantage de place dans l'anneau 2 de manière à ce qu'au cours du gonflement dû à la charge (qui peut aller jusqu'à 10% du volume), l'anneau 2 ou la batterie ne soient pas détériorés.

Le dispositif d'identification 1 selon l'invention pourra embarquer un module sécurisé 34 associé à un contrôleur NFC qui permet d'utiliser le dispositif 1 dans le domaine bancaire, notamment pour réaliser des transactions sécurisées.

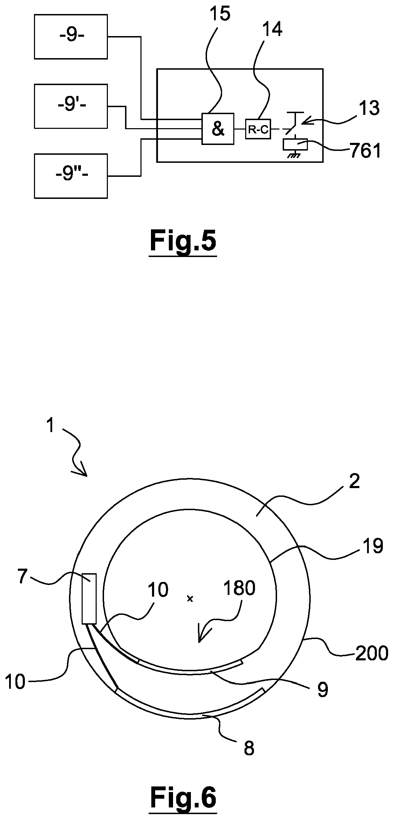

Une interface utilisateur 35, telle qu'une diode, peut-aussi être insérée sur l'anneau 2 de manière à informer l'utilisateur de l'état effacé ou non des zones mémoires 761. Par exemple, si l'utilisateur enlève l'anneau 2 puis le remet sans recopier ses données personnelles lors d'une utilisation ultérieure, la diode électroluminescente 35 s'illumine dans une couleur, par exemple en rouge, pour informer que le dispositif 1 n'est pas fonctionnel. Dans le cas contraire, la diode 35 s'illumine dans une autre couleur, par exemple en blanc ou en vert pour informer que le dispositif 1 est fonctionnel. Alternativement, l'élément photovoltaïque 9 pourra être associé à un interrupteur électronique 13 représenté en figure 5 apte à provoquer l'effacement ou le cryptage (la détérioration) des données des zones 761. A titre d'exemple, cet interrupteur 13 pourra être constitué par un transistor. L'élément photosensible 9 est associé à un circuit électronique 14 comportant de préférence au moins une résistance R pour régler un seuil de déclenchement du changement d'état de l'élément photosensible 9 et un condensateur C pour régler une durée avant déclenchement du changement d'état. Dans tous les cas, la génération du courant et donc l'effacement des données s'effectue rapidement dans un délai de préférence inférieur à 100ms.

Une fois les données personnelles effacées, le dispositif 1 devient inutilisable du fait de la suppression des données d'identification. Pour pouvoir s'en resservir, l'utilisateur devra effectuer une recopie des données par un dispositif communicant, par exemple de type téléphone portable ou tablette, dans la mémoire du transpondeur 3. Bien entendu, l'anneau 2 devra être porté par l'utilisateur lors de l'opération, car dans le cas contraire la recopie n'aurait aucun effet dans la mesure où les données se supprimeraient instantanément du fait de l'éclairement de la cellule photovoltaïque 9.

Dans un mode de réalisation particulier, quelques données utilisateurs sont conservées et associées à un compte client. Dans ce cas, seul l'utilisateur originel est susceptible de pouvoir recopier les données manquantes suite à l'effacement sur la mémoire 76 du transpondeur 3. Si l'application du dispositif communicant observe que le compte utilisateur ne correspond pas au dispositif 1 alors la copie des données est bloquée par l'application.

En variante, la réutilisation des données effacées ou cryptées est autorisée par une "réactivation" du dispositif 1 se produisant après une authentification de l'utilisateur. Cette authentification est par exemple réalisée au moyen d'un dispositif dédié de type lecteur biométrique intégré à l'anneau 2.

Par ailleurs, l'élément photosensible 9 pourra être recouvert d'une couche 91 de vernis de protection translucide (cf. figure 1b). La translucidité du vernis est un critère de sélection permettant d'ajuster le seuil de sensibilité de la cellule 9, afin que les données ne s'effacent pas au moindre mouvement écartant la cellule 9 par rapport au doigt de l'utilisateur. On adaptera également la taille de la cellule 9 en fonction de l'application pour ajuster la sensibilité du dispositif 1. En effet, plus la cellule 9 est grande, plus la cellule 9 captera de la lumière et donc plus la cellule 9 sera sensible. Ainsi, dans le mode de réalisation des figures 3a et 3b, la taille de la cellule 9 est réduite par rapport à celle de la cellule des figures 1a et 1b.

Dans le mode de réalisation de la figure 4, le dispositif 1 comporte une pluralité de cellules photovoltaïques 9, 9', 9". Cela permet d'éviter une suppression intempestive des données personnelles, dans la mesure où l'effacement des données ne s'effectue alors que si l'ensemble des cellules 9, 9', 9" produit suffisamment d'électricité. A cet effet, on utilise une logique 14 intégrant un système étant ou pouvant s'apparenter à une porte logique de type "ET" et dont la sortie est en communication avec l'interrupteur 13. Afin d'optimiser la répartition des cellules, les cellules 9, 9', 9" sont de préférence espacées angulairement entre elles de manière régulière autour de l'anneau 2. Ainsi, pour les trois cellules 9, 9', et 9" sont implantées de telle façon que les angles A1, A2, et A3 entre deux cellules consécutives sont égaux et valent 120 degrés chacun.

Dans le mode de réalisation de la figure 6, l'anneau 2 comporte un moyen 180 d'anti-rotation pour bloquer en rotation l'anneau 2 autour d'un doigt de l'utilisateur. Cela permet d'indexer en rotation l'anneau 3 autour du doigt pour s'assurer d'un positionnement de l'antenne 8 du côté de l'intérieur de la main lorsque cette dernière est fermée. Ce moyen 180 d'anti-rotation est en l'occurrence constitué par une forme ovaloïde ménagée dans la face interne 19 de l'anneau 2 et du côté de l'antenne 8. Le centre de la forme ovale est par exemple confondu avec le centre de l'anneau 2.

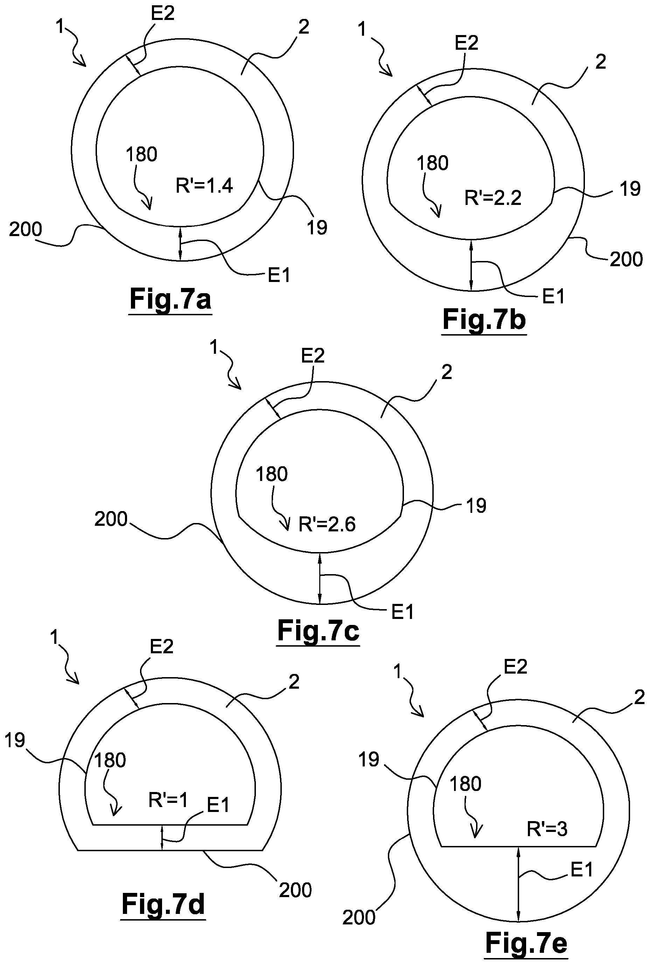

Comme cela est visible sur les figures 7a à 7c, le ratio R' entre la plus grande épaisseur E1 d'une portion d'anneau comportant la forme ovaloïde et l'épaisseur E2 de base de l'anneau 2, c'est-à-dire l'épaisseur d'une portion d'anneau dépourvue de la forme ovaloïde est variable et par exemple compris entre 1 et 5, de préférence entre 1 et 3. Le ratio R' pourra ainsi valoir par exemple 1.4 (cf. figure 7a), 2.2 (cf. figure 7b), ou 2.6 (cf. figure 7c).

En variante, la forme ovaloïde peut être remplacée par une forme de méplat ménagée dans la face interne 19 et dans la face externe 200 (cf. figure 7d), ou uniquement dans la face interne 19 (cf. figure 7e). Le ratio R' pourra également être variable et valoir par exemple 1 (figure 7d), ou 3 (figure 7e). En variante, on prévoit une forme de méplat ou ovaloïde suivant deux côtés diamétralement opposés de l'anneau 2. La forme spécifique de l'anneau 2 pour indexer correctement l'antenne 8 pourrait être protégée indépendamment du système d'effacement des données précédemment décrit.

Dans le mode de réalisation de la figure 11, un PCB 10 sur lequel sont fixés les composants est implanté sur le méplat de l'anneau 2. Le PCB 10 est recouvert par deux couches périphériques de protection 36, 37.

Le système de stockage d'énergie 31 comporte des capacités 33 de type condensateurs fixées au PCB 10. La cellule photosensible 9 qui détecte quand l'anneau 2 est retiré du doigt est recouverte par la couche de vernis 91.

Les éléments 38, 39 situés de part et d'autre de la cellule 9 sont des contrôleurs NFC, ainsi que le module sécurisé permettant de travailler dans le domaine du paiement, en autorisant notamment la réalisation de transactions bancaires via le dispositif 1 selon l'invention.

Dans le cas d'une application automobile illustrée en figure 8, le transpondeur 3 pourra communiquer par exemple avec N lecteurs radio 15 directionnels (N étant un entier supérieur ou égal à 1) situés dans un véhicule 20. Cette communication vise à permettre une ouverture de droits et/ou services pour un porteur du dispositif d'identification 1.

A cet effet, chaque lecteur radio-fréquentiel 15 comporte une antenne de réception pour transpondeur 3. Cette antenne se présente de préférence sous la forme d'une bobine de section rectangulaire associée à un condensateur afin de constituer une antenne résonnante. Une telle antenne concentre son énergie dans certaines directions et, est prévue pour fonctionner de façon optimale à une certaine fréquence de résonnance et pour une résistance d'adaptation précise. Pour rendre cette antenne moins sensible aux éléments métalliques environnants sa fréquence de résonnance et sa résistance d'adaptation ont été adaptées.

Dans un exemple de réalisation, une bobine d'environ 3mH avec une résistance d'adaptation de l'ordre de 250 à 500 ohms offre au lecteur radio 15 un signal de qualité optimale. La fréquence de résonnance n'est pas nécessairement fixée à la fréquence du champ électromagnétique émis par le transpondeur 3. En effet, une meilleure réception du champ électromagnétique est obtenue lorsque la fréquence de résonnance de l'antenne du lecteur radio 15 est supérieure de 5 à 20% par rapport à la fréquence du champ électromagnétique. L'alimentation électrique du lecteur radio 15 est assurée par une batterie 21 présente au sein du véhicule 20 délivrant généralement une tension de 12 Volts.

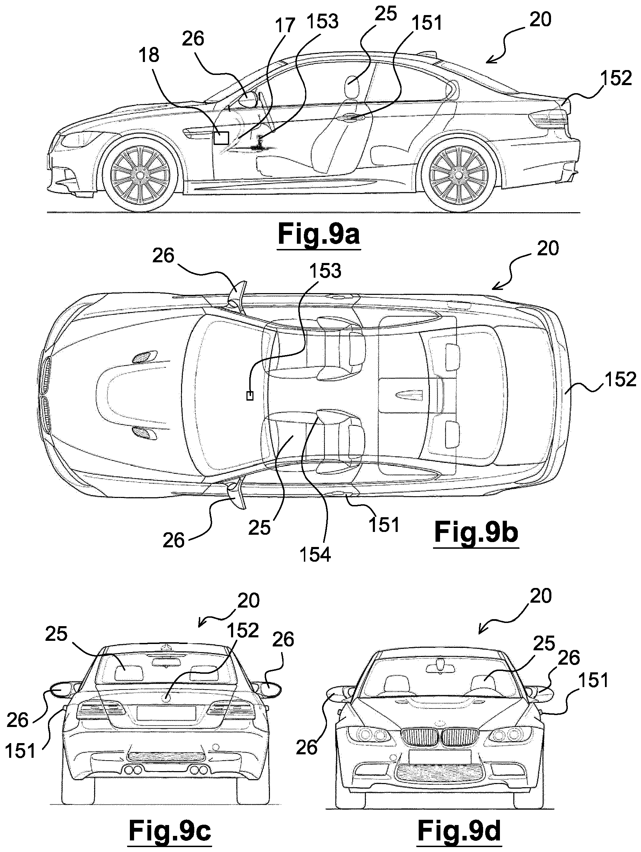

Ce type de lecteur radio 15 est placé de manière à optimiser la lecture du champ électromagnétique émis par le transpondeur 3. A titre d'exemple visible sur les figures 9a à 9d, quatre lecteurs radio 15 (N = 4) contrôlant chacun une fonction différente, sont installés sur un véhicule 20. Les lecteurs radio 15 ont été en l'occurrence intégrés dans une poignée de porte 151, dans une poignée de coffre 152, dans un pommeau de vitesse 153, et à proximité d'une boucle de ceinture de sécurité 154. Pour une moto, les lecteurs radio 15 peuvent être intégrés sur le réservoir essence ou encore dans la poignée d'accélération. On notera dans ce cas que le champ électromagnétique est peu atténué par un textile de type gant venant s'intercaler entre le transpondeur 3 et le lecteur radio 15. Les lecteurs radio 15 se présentent sous la forme d'un solénoïde à environ 400 spires avec une inductance de l'ordre de 3mH. La forme, leur résistance d'adaptation, leur fréquence de résonnance, et le nombre N de lecteur radio 15, ne sont pas limitatifs.

Ainsi, lorsque le porteur saisit la poignée d'une portière du véhicule 20 afin de l'ouvrir avec sa main portant le dispositif d'identification 1 dans un état activé, le dispositif 1 subit une induction électromagnétique de la part du lecteur radio 151 intégré à la poignée. Le courant induit, de l'ordre de 10µA et 5V, est suffisant pour alimenter le transpondeur 3 qui renvoie à l'antenne du lecteur radio 151 un code d'identification haute sécurité préprogrammé lors de la fabrication et/ou lors de la copie par le dispositif communicant. Ce code d'identification est alors filtré, démodulé et analysé par un microcontrôleur situé dans un circuit électronique 18 situé à proximité du lecteur radio 153. Le dispositif d'identification 1 est alors reconnu, le véhicule 20 se déverrouille instantanément et une adaptation du poste de conduite s'effectue rapidement, dans un délai de l'ordre de 4 à 6 secondes.

Afin de contrôler au mieux la communication entre le dispositif d'identification 1 et les lecteurs radio 15, un interrupteur 17 commande la mise sous tension du circuit électronique du véhicule sous le contrôle du boîtier 18, permettant à un lecteur radio 153 d'émettre un fort champ magnétique.

De préférence, un interrupteur 17 d'allumage commandant le préchauffage, le démarrage et l'arrêt du moteur du véhicule 20, est associé à un lecteur radio de démarrage 153 situé dans le pommeau de vitesse. L'interrupteur 17 peut être placé dans l'habitacle, à portée de main du conducteur tel que sur le côté du pommeau de vitesse, près du frein à main, ou encore sur le tableau de bord. Un tel interrupteur 17 peut être mis en parallèle du système de démarrage classique en branchant des fils de commande de préchauffage et de démarrage à des actionneurs concernés du moteur ou en les branchant au niveau d'un contacteur de clé 23.

Ainsi, lorsque le conducteur installé au poste de conduite appuie sur l'interrupteur 17 contrôlant l'allumage et lorsqu'il pose sa main dotée du dispositif d'identification 1 à proximité du lecteur radio 153 de démarrage, le véhicule 20 démarre. Le véhicule 20 reste en état de fonctionnement jusqu'à un nouvel appui sur l'interrupteur 17. A cet effet, le lecteur radio 153 contrôlant le démarrage détecte le dispositif d'identification 1 et lorsque le porteur appuie sur l'interrupteur 17, le lecteur associé 153 bascule dans un état hors tension. Dans cet état, le lecteur 153 ne nécessite plus d'identification pour garder le moteur en marche. Un nouvel appui sur l'interrupteur 17 permettra de couper le moteur du véhicule 20 et de mettre simultanément le lecteur radio 153 sous tension. Le lecteur radio 153 réclamera alors le code d'identification haute sécurité du dispositif d'identification 1.

Les N lecteurs passent généralement d'un état sous tension à l'autre en fonction de l'état de verrouillage ou de déverrouillage du véhicule 20, à l'exception du lecteur radio 153 contrôlant le démarrage et du lecteur 152 placé dans la poignée de coffre. En effet, quel que soit le verrouillage ou le déverrouillage du véhicule 20, le lecteur 152 peut actionner des vérins ouvrant le coffre automatiquement. Bien entendu, chaque lecteur radio 15 peut également être associé à un interrupteur 17.

Comme montré en figure 5, le dispositif d'identification 1 peut agir sur une commande de verrouillage et de déverrouillage centralisée 22, sur un contacteur de clé 23, sur divers accessoires 24, sur un siège conducteur 25, sur des rétroviseurs 26, et sur une interface 27 contrôlant un ordinateur de bord 28, un GPS 29, et une configuration 30 véhicule. Ces différentes commandes se font par l'intermédiaire d'actionneurs commandant par exemple la position et l'orientation des rétroviseurs 26, la position, la hauteur, l'inclinaison du siège conducteur 25 et son appui tête, la position du volant. Par l'intermédiaire d'un bus connecté à une interface 27 adaptée au protocole de communication du véhicule 20, le dispositif 1 peut également agir sur le visuel d'un écran d'ordinateur de bord 28, la station radio écoutée, la voix du GPS 29, la hauteur des suspensions ainsi que leur dureté, la dureté de la direction assistée, l'électronique d'aide à la conduite, le style de conduite, la puissance du véhicule 20 et un éventuel bridage moteur destiné aux jeunes conducteurs. De préférence, le dispositif d'identification 1 est synchronisé avec l'horloge de temps absolu envoyée par le GPS.

Ainsi, lorsqu'un porteur est authentifié comme étant conducteur d'un véhicule 20, il retrouve chacun des réglages, accessoires 24, et typage de conduite, tels qu'il les avait programmés. Chaque réglage supplémentaire que le conducteur fera au cours de sa session, se trouvera enregistré. L'invention permet ainsi de retrouver le poste de conduite exactement comme laissé lors de la dernière utilisation, et de brider le moteur pour les jeunes conducteurs.

Selon le véhicule 20 et le besoin, le dispositif d'identification 1 peut également être connecté au réseau Internet par l'intermédiaire d'une connexion de donnée cellulaire, par Wifi ou Bluetooth, ceci permettant une interaction avec la base de données du véhicule 20 contenant un certain nombre de ses caractéristiques, par exemple et à titre non restrictif : les profils d'identifications, la configuration du poste de conduite, l'historique de conduite, la planification des horaires de conduite, la consommation de carburant, le kilométrage effectué ou à effectuer, l'itinéraire programmé dans le GPS 29, et l'itinéraire réellement effectué.

En outre, plusieurs dispositifs d'identification 1 peuvent être synchronisés à un même véhicule 20. L'enregistrement des dispositifs d'identification 1, du poste de conduite, et de la configuration moteur s'effectue en actionnant une commande spécifique du circuit électronique 18 en interaction avec le microcontrôleur. Ainsi, chaque porteur utilisant le véhicule 20 pourra être identifié. L'ensemble du poste de conduite, ainsi que les caractéristiques du moteur pourront être adaptés, des plages horaires d'utilisation, ainsi que des historiques pourront être enregistrés. La commande spécifique du circuit électronique 18 peut se présenter sous la forme d'un interrupteur, d'un clavier à code, ou encore d'un accès à distance de type internet.

L'utilisation d'un tel dispositif d'identification 1 permet ainsi une identification simplifiée et sécurisée. De plus, ce dispositif 1 ne nécessitant pas de pile ne risque pas de s'oxyder. Plus avantageusement, le dispositif 1 permet au porteur d'actionner son dispositif d'identification 1 selon sa volonté, ce qui évite tout fonctionnement intempestif sans contrôle du porteur.

Le transpondeur radio-fréquentiel 3 pourra comporter en variante plusieurs microcontrôleurs 7 et plusieurs antennes 8. Par ailleurs, l'exemple de réalisation a été donné en référence à des données personnelles d'un utilisateur, mais l'invention pourra bien entendu être mise en œuvre avec n'importe quel type de données stockées dans la mémoire 76 du microcontrôleur.

## Revendications

1. Dispositif d'identification (1) comprenant un anneau (2) intégrant au moins un transpondeur radio-fréquentiel (3) comportant un microcontrôleur (7) muni d'au moins une mémoire comportant des zones (761) stockant des données et d'au moins une antenne (8) pour émettre un champ électromagnétique (9) transportant des informations d'identification, ledit dispositif d'identification (1) comprenant en outre:
- au moins un élément photosensible (9) positionné sur une face interne (19) dudit anneau (2),
- ledit élément photosensible (9) étant apte à générer ou à autoriser la délivrance d'un courant lorsque ledit élément photosensible (9) est éclairé pour provoquer une détérioration desdites données,
- ledit élément photosensible (9) assurant une fonction de déclencheur autorisant un système de stockage d'énergie (31) à alimenter le microcontrôleur (7) qui est configuré pour effectuer une détérioration desdites données,
**caractérisé en ce que** ledit élément photosensible (9) est associé à un circuit électronique (14) comportant au moins une résistance (R) pour régler un seuil de déclenchement d'un changement d'état dudit élément photosensible (9) et un condensateur (C) pour régler une durée avant déclenchement dudit changement d'état.

2. Dispositif selon la revendication 1, **caractérisé en ce qu'**il comporte en outre au moins un système de récupération d'énergie (32) pour alimenter en énergie le système de stockage d'énergie (31).

3. Dispositif selon la revendication 1 ou 2, **caractérisé en ce que** ledit élément photosensible (9) est constitué par une cellule photovoltaïque.

4. Dispositif selon l'une quelconque des revendications 1 à 3, **caractérisé en ce que** ledit élément photosensible (9) est recouvert d'une couche (91) de vernis de protection translucide.

5. Dispositif selon l'une quelconque des revendications 1 à 4, **caractérisé en ce qu'**il comporte une pluralité de cellules photovoltaïques (9, 9', 9").

6. Dispositif selon la revendication 5, **caractérisé en ce que** lesdites cellules photovoltaïques (9, 9', 9") sont espacées angulairement entre elles de manière régulière autour dudit anneau (2).

7. Dispositif selon l'une quelconque des revendications 1 à 6, **caractérisé en ce que** ledit élément photosensible (9) est relié à un interrupteur électronique (13) apte à provoquer un effacement ou un cryptage desdites données lorsque ledit interrupteur électronique (13) est alimenté par ledit élément photosensible (9).

8. Dispositif selon l'une quelconque des revendications 1 à 7, **caractérisé en ce que** ledit anneau (2) comporte au moins un moyen d'anti-rotation (180) pour bloquer en rotation ledit anneau (2) autour d'un doigt de l'utilisateur.

9. Dispositif selon la revendication 8, **caractérisé en ce que** ledit moyen d'anti-rotation (180) est constitué par un méplat ou une forme ovaloïde ménagée dans ladite face interne (19) dudit anneau (2).

10. Dispositif selon la revendication 9, **caractérisé en ce qu'**un ratio (R') entre une plus grande épaisseur (E1) d'une portion d'anneau comportant le méplat ou la forme ovaloïde et une épaisseur d'une portion d'anneau (E2) dépourvue de méplat ou de forme ovaloïde est compris entre 1 et 5.

11. Dispositif selon l'une quelconque des revendications 1 à 10, **caractérisé en ce que** des informations contenues dans la mémoire dudit microcontrôleur (7) sont cryptées.

## Patentansprüche

1. Identifikationsvorrichtung (1) mit einem Ring (2) mit mindestens einem Hochfrequenztransponder (3) mit einem Mikrocontroller (7) mit mindestens einem Speicher mit Datenspeicherbereichen (761) und mindestens einer Antenne (8) zum Aussenden eines elektromagnetischen Felds (9), das Identifikationsinformationen trägt, wobei die Identifikationsvorrichtung (1) ferner umfasst:
- mindestens ein lichtempfindliches Element (9), das auf einer Innenfläche (19) des Rings (2) positioniert ist,
- wobei das lichtempfindliche Element (9) in der Lage ist, einen Strom zu erzeugen oder die Abgabe eines Stroms zuzulassen, wenn das lichtempfindliche Element (9) beleuchtet wird, um eine Verschlechterung der Daten zu verursachen,
- wobei das lichtempfindliche Element (9) eine Triggerfunktion bereitstellt, die ein Energiespeichersystem (31) autorisiert, den Mikrocontroller (7) zu versorgen, der dazu eingerichtet ist, eine Verschlechterung der Daten durchzuführen,
**dadurch gekennzeichnet, dass** das lichtempfindliche Element (9) mit einer elektronischen Schaltung (14) verbunden ist, die mindestens einen Widerstand (R) zum Einstellen einer Auslöseschwelle für eine Zustandsänderung des lichtempfindlichen Elements (9) und einen Kondensator (C) für Einstellen einer Dauer vor dem Auslösen der Zustandsänderung umfasst.

2. Vorrichtung nach Anspruch 1, **dadurch gekennzeichnet, dass** sie ferner mindestens ein Energierückgewinnungssystem (32) zur Energieversorgung des Energiespeichersystems (31) umfasst.

3. Vorrichtung nach Anspruch 1 oder 2, **dadurch gekennzeichnet, dass** das lichtempfindliche Element (9) aus einer Photovoltaikzelle besteht.

4. Vorrichtung nach einem der Ansprüche 1 bis 3, **dadurch gekennzeichnet, dass** das lichtempfindliche Element (9) mit einer Schicht (91) aus durchscheinendem Schutzlack bedeckt ist.

5. Vorrichtung nach einem der Ansprüche 1 bis 4, **dadurch gekennzeichnet, dass** sie mehrere Photovoltaikzellen (9, 9', 9'') umfasst.

6. Vorrichtung nach Anspruch 5, **dadurch gekennzeichnet, dass** die photovoltaischen Zellen (9, 9', 9'') in regelmäßigen Winkelabständen voneinander um den Ring (2) herum angeordnet sind.

7. Vorrichtung nach einem der Ansprüche 1 bis 6, **dadurch gekennzeichnet, dass** das lichtempfindliche Element (9) mit einem elektronischen Schalter (13) verbunden ist, der die Daten löschen oder verschlüsseln kann, wenn der elektronische Schalter (13) vom lichtempfindlichen Element (9) mit Strom versorgt wird.

8. Vorrichtung nach einem der Ansprüche 1 bis 7, **dadurch gekennzeichnet, dass** der Ring (2) mindestens ein Verdrehsicherungsmittel (180) zum Blockieren der Drehung des Rings (2) um einen Finger des Benutzers umfasst.

9. Vorrichtung nach Anspruch 8, **dadurch gekennzeichnet, dass** das Verdrehsicherungsmittel (180) aus einer Abflachung oder einer ovalen Form in der Innenfläche (19) des Rings (2) besteht.

10. Vorrichtung nach Anspruch 9, **dadurch gekennzeichnet, dass** ein Verhältnis (R') einer größeren Dicke (E1) eines Ringabschnitts mit der Flachfläche oder der ovalen Form zu einer Dicke eines Ringabschnitts (E2) ohne Abflachung oder ovale Form zwischen 1 und 5 liegt.

11. Vorrichtung nach einem der Ansprüche 1 bis 10, **dadurch gekennzeichnet, dass** im Speicher des Mikrocontrollers (7) enthaltene Informationen verschlüsselt sind.

## Claims

1. An identification device (1) comprising a ring (2) incorporating at least one radio-frequency transponder (3) comprising a microcontroller (7) provided with at least one memory comprising areas (761) storing data and at least one antenna (8) for emitting an electromagnetic field (9) carrying identification information, said identification device (1) further comprising:
- at least one photosensitive element (9) positioned on an internal face (19) of said ring (2),
- said photosensitive element (9) being able to generate or allow the delivery of a current when said photosensitive element (9) is illuminated to cause deterioration of said data,
- said photosensitive element (9) providing a trigger function authorizing an energy storage system (31) to supply the microcontroller (7) which is configured to carry out a deterioration of said data,
**characterized in that** said photosensitive element (9) is associated with an electronic circuit (14) comprising at least one resistor (R) for setting a trigger threshold for a change of state of said photosensitive element (9) and a capacitor (C) for setting a duration before triggering said change of state.

2. The device according to claim 1, **characterized in that** it further comprises at least one energy recovery system (32) for supplying energy to the energy storage system (31).

3. The device according to claim 1 or 2, **characterized in that** said photosensitive element (9) consists of a photovoltaic cell.

4. The device according to any one of the claims 1 to 3, **characterized in that** said photosensitive element (9) is covered with a layer (91) of translucent protective varnish.

5. The device according to any one of the claims 1 to 4, **characterized in that** it comprises a plurality of photovoltaic cells (9, 9', 9'').

6. The device according to claim 5, **characterized in that** said photovoltaic cells (9, 9', 9'') are angularly spaced from each other in a regular manner around said ring (2).

7. The device according to any one of the claims 1 to 6, **characterized in that** said photosensitive element (9) is connected to an electronic switch (13) capable of erasing or encrypting said data when said electronic switch (13) is powered by said photosensitive element (9).

8. The device according to any one of the claims 1 to 7, **characterized in that** said ring (2) comprises at least one anti-rotation means (180) for blocking the rotation of said ring (2) around a finger of the user.

9. The device according to claim 8, **characterized in that** said anti-rotation means (180) consists of a flat surface or an ovaloid shape in said internal face (19) of said ring (2).

10. The device according to claim 9, **characterized in that** a ratio (R') of a greater thickness (E1) of a ring portion comprising the flat surface or the ovaloid shape to a thickness of a ring portion (E2) with no flat surface or ovaloid shape is between 1 and 5.

11. The device according to any one of the claims 1 to 10, **characterized in that** information contained in the memory of said microcontroller (7) is encrypted.
